# EUROPÄISCHE PATENTSCHRIFT

(11) **EP 0 575 643 B1**
(45) Veröffentlichungstag und Bekanntmachung des Hinweises auf die Patenterteilung: **04.10.1995**
(21) Anmeldenummer: 92110447.7
(22) Anmeldetag: 20.06.1992
(51) Int. Cl.: F16K 27/06

(54) **Kugelventil aus Kunststoff sowie Verfahren zu seiner Herstellung**
Plastic ball valve and method of its manufacture
Robinet à tournant sphérique en matière plastique et procédé de fabrication de celui-ci

(43) Veröffentlichungstag der Anmeldung: 29.12.1993
(73) Patentinhaber: R. Woeste & Co. GmbH & Co. KG, D-40223 Düsseldorf (DE)
(72) Erfinder: Woeste, Albrecht, Dipl.-Ing., W-4000 Düsseldorf 1 (DE)
(74) Vertreter: Stenger, Watzke & Ring Patentanwälte

(56) Entgegenhaltungen:
- EP-A- 0 111 910
- FR-A- 2 317 575
- GB-A- 1 341 254
- US-A- 3 857 546
- US-A- 4 172 583
- PATENT ABSTRACTS OF JAPAN vol. 9, no. 124 (M-383)(1847) 29. Mai 1985 & JP-A-60 008 582 (NITSUSHIN GAS KIZAI) 17. Januar 1985

## Beschreibung

Die Erfindung betrifft ein insbesondere für Gasversorgungsleitungen bestimmtes Kugelventil aus Kunststoff und ein Verfahren zur Herstellung eines derartigen Kugelventils.

Es sind bereits Kugelventile für Gasversorgungsleitungen mit einem aus Kunststoff bestehenden, zwei Rohranschlußstutzen aufweisenden Gehäuse bekannt, in welchem eine mit einer Durchgangsbohrung versehene und durch eine Schaltwelle verdrehbare Ventilkugel mittels zweier separater Lagerringe gelagert ist, die gegenüber der Ventilkugel mittels Dichtringen abgedichtet sind. Die Gehäuse derartiger Kugelventile werden aus verschiedenen Teilen zusammengesetzt, die nach der Montage des Ventils entweder miteinander verschraubt oder verschweißt werden, bevor sie über ihre Rohranschlußstutzen in eine Kunststoffleitung, vorzugsweise durch Verschweißen, eingesetzt werden. Diese bekannten Kugelventile mit einem aus Kunststoff bestehenden Gehäuse haben den Vorteil, daß sie keine Korrosionsprobleme kennen und nach ihrem Einsetzen keinen Fremdkörper in der ebenfalls aus Kunststoff bestehenden Gasversorgungsleitung darstellen.

Es ist jedoch ein Nachteil der bekannten Kugelventile, daß ihr Gehäuse aus mehreren Teilen zusammengesetzt ist, wodurch sich nicht nur ein höherer Montageaufwand, sondern auch Dichtigkeitsprobleme und geringere Festigkeiten ergeben.

Der Erfindung liegt demzufolge die **Aufgabe** zugrunde, ein Kugelventil der voranstehend beschriebenen Art sowie ein Verfahren zu seiner Herstellung zu schaffen, die eine einstückige Herstellung des aus Kunststoff bestehenden Gehäuses ermöglichen.

Die **Lösung** dieser Aufgabenstellung durch das erfindungsgemäße Verfahren ist dadurch gekennzeichnet, daß die an gegenüberliegenden Seiten der Ventilkugel angeordneten Lagerringe durch eine ringförmige, mit Durchtrittsöffnungen versehene Einlage miteinander und mit einer Lagerbuchse für die in die Ventilkugel eingreifende Schaltwelle verbunden, in diesem vormontierten Zustand in eine die äußere Form des Gehäuses und die Durchflußweite der Rohranschlußstutzen erzeugende Spritzform eingelegt und mit Kunststoff umspritzt werden.

Die ringförmige und mit Durchtrittsöffnungen für den Kunststoff versehene Einlage, welche die die Ventilkugel haltenden Lagerringe miteinander verbindet und zugleich die Lagerbuchse für die in die Ventilkugel eingreifende Schaltwelle trägt, bewirkt bei dem in einer Spritzform ablaufenden Vorgang des Umhüllens der vormontierten Teile mit Kunststoff eine Art Teilung des entstehenden Gehäuses in einen Außen- und Innenteil. Hierdurch wird bei der Abkühlung des in der Spritzform erzeugten Gehäuses ein Schrumpfvorgang der beiden Gehäuseteile relativ zueinander erzwungen und ein Schrumpfen des Gehäuses radial nach innen verhindert, womit ein Klemmen der Ventilkugel im Gehäuse verbunden wäre. Das erfindungsgemäße Verfahren vermeidet somit ein unkontrolliertes Schrumpfen des Gehäuses in Richtung auf die von ihm umschlossene Ventilkugel und ermöglicht erstmals eine einstückige Herstellung des Kunststoffgehäuses ohne die Gefahr von unkontrollierbaren Beeinflussungen der Ventilkugel. Die Einlage übernimmt darüber hinaus in der Art einer Bewehrung alle Zug-, Druck- und Bewegungskräfte sowie auftretende Drehmomente.

Da mit dem erfindungsgemäßen Verfahren das aus Kunststoff bestehende Gehäuse zusammen mit beiden Rohranschlußstutzen einstückig hergestellt wird, ergeben sich keinerlei Dichtigkeitsprobleme; außerdem entfällt eine aufwendige und mit Fehlermöglichkeiten behaftete Endmontage, zumal die Lagerringe mit der Ventilkugel und der Lagerbuchse durch die Verbindung mittels der Einlage in vormontiertem Zustand in die Spritzform eingelegt werden. Mit dem erfindungsgemäßen Verfahren sind Kugelventile mit Nennweiten zwischen 50 bis 300 mm problemlos herstellbar.

Um das endgültige Spiel zwischen der Ventilkugel und dem Kunststoffgehäuse vorzugeben, kann gemäß einem weiteren Merkmal der Erfindung vor dem Umspritzen der Teile die Ventilkugel erwärmt werden. Durch den anschließenden Schrumpfvorgang der erkaltenden Ventilkugel ergibt sich je nach Materialpaarung und Erwärmung ein bestimmtes, vorherbestimmbares Spiel.

Das erfindungsgemäße Kugelventil ist dadurch gekennzeichnet, daß die Lagerringe durch eine mit Durchtrittsöffnungen versehene ringförmige Einlage miteinander verbunden sind, an der zugleich eine Lagerbuchse für die in die Ventilkugel eingreifende Schaltwelle befestigt ist.

Gemäß einem weiteren Merkmal der Erfindung können die Lagerringe an ihrem mit der Einlage versehenen Umfang mit Schlitzen versehen sein, um den Durchtritt von Kunststoff beim Spritzvorgang zu erleichtern.

Die Schaltwelle ist vorzugsweise mittels mindestens einer Ringdichtung gegenüber der Lagerbuchse abgedichtet. Zur Abdeckung der aus dem Gehäuse herausragenden Schaltwelle kann das Gehäuse mit einem Schaltdom versehen sein.

Die Lagerringe, die Ventilkugel, die Einlage und die Lagerbuchse können aus Rotguß, Messing, Edelstahl oder Kunststoff, vorzugsweise glasfaserverstärktem Kunststoff oder Polypropylen hergestellt sein, wobei es durchaus möglich ist, diese Einzelteile jeweils aus dem gewünschten Material herzustellen. Das mit den Rohranschlußstutzen versehene Gehäuse wird vorzugsweise aus Polyäthylen hergestellt, die Dichtringe aus Nitrilbutyl-Kautschuk.

Auf der Zeichnung ist ein Ausführungsbeispiel des erfindungsgemäßen Kugelventils dargestellt, und zwar zeigen:
- Fig. 1: einen Längsschnitt durch das Kugelventil und
- Fig. 2: einen Querschnitt gemäß der Schnittlinie II - II in Fig. 1.

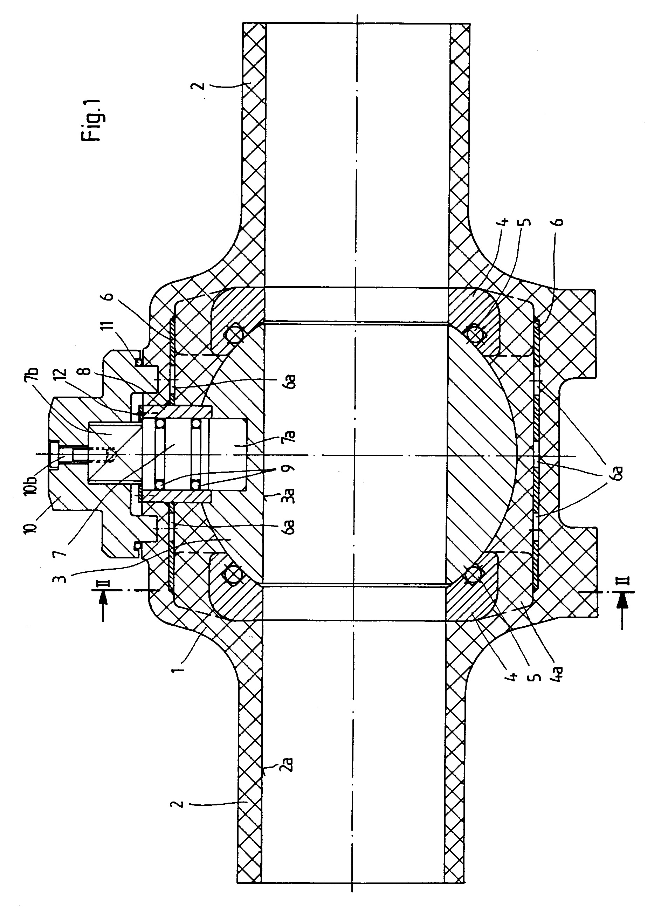

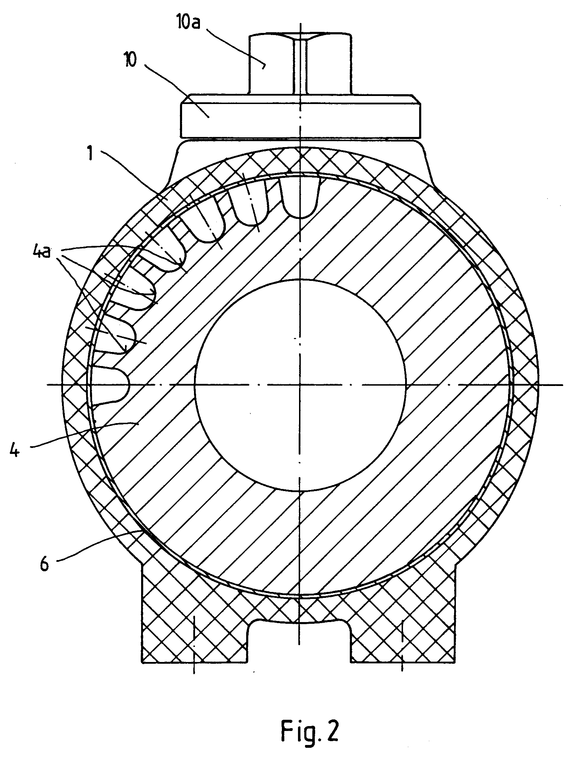

Das in den Fig. 1 und 2 als Ausführungsbeispiel dargestellte Kugelventil umfaßt ein Gehäuse 1 aus Kunststoff, an dem zwei in entgegengesetzte Richtung weisende Rohranschlußstutzen 2 einstückig angeformt sind. Diese Rohranschlußstutzen 2 dienen zur Verbindung des Kugelventils mit einer auf der Zeichnung nicht dargestellten, ebenfalls aus Kunststoff hergestellten Leitung, insbesondere einer Gasversorgungsleitung. Das Gehäuse 1 kann am Ende der Rohranschlußstutzen 2 auch mit Anschraubflanschen versehen sein.

Im Inneren des Gehäuses 1 ist eine als Ventilkörper dienende Ventilkugel 3 angeordnet, die mit einer Durchflußbohrung 3a versehen ist, welche der Durchflußweite 2a der Rohranschlußstutzen 2 entspricht. Die Ventilkugel 3 ist mittels zweier Lagerringe 4 gelagert, die zur Abdichtung gegenüber der Ventilkugel 3 jeweils mit einem Dichtring 5 versehen sind.

Wie am besten aus Fig. 2 hervorgeht, ist jeder Lagerring 4 auf seinem Umfang mit Schlitzen 4a versehen, von denen in Fig. 2 nur einige eingezeichnet sind. Außerdem sind die Lagerringe 4 an der verbleibenden Umfangsfläche durch eine ringförmige Einlage 6 miteinander verbunden. Diese Verbindung kann beispielsweise durch Kleben oder Schweißen erzeugt werden. In Fig. 1 sind Schweißnähte eingezeichnet.

Um die in Fig. 1 in der Durchgangsstellung gezeichnete Ventilkugel 3 zur Drosselung oder für den Abschluß der Durchflußweite 2a verdrehen zu können, ist im Gehäuse 1 eine Schaltwelle 7 angeordnet, die drehbar in einer Lagerbuchse 8 gelagert ist. Die Schaltwelle 7 greift mittels eines Kupplungsstückes 7a in eine entsprechende Ausnehmung der Ventilkugel 3 ein, so daß diese Ventilkugel 3 mittels der Schaltwelle 7 um die Achse der Schaltwelle 7 verdreht werden kann. Zu diesem Zweck ist am außenliegenden Ende der Schaltwelle 7 ein Vierkant 7b ausgebildet.

Die Lagerbuchse 8 ist in einer entsprechenden Aussparung der ringförmigen Einlage 6 angeordnet. Die Ausführungsform nach Fig. 1 zeigt, daß die Lagerbuchse 8 mit der Einlage 6 verschweißt ist. Zur Abdichtung der Schaltwelle 7 gegenüber der Lagerbuchse 8 sind beim Ausführungsbeispiel zwei Ringdichtungen 9 angeordnet. Auf den Vierkant 7b der Schaltwelle 7 ist beim Ausführungsbeispiel schließlich ein Schaltdom 10 aufgesetzt, der gemäß Fig. 2 mit Schlüsselflächen 10a ausgebildet ist und durch eine Schraube 10b unverdrehbar an der Schaltwelle 7 befestigt ist. Das in das Gehäuse 1 hineinragende Ende dieses Schaltdomes 10 ist gegenüber dem Gehäuse 1 verdrehbar und zusätzlich durch eine Dichtung 11 abgedichtet.

Je nach Einsatzzweck können die Lagerringe 4, die Ventilkugel 3, die Einlage 6 und die Lagerbuchse 8 aus Rotguß, Messing, Edelstahl oder Kunststoff, vorzugsweise glasfaserverstärktem Kunststoff oder Polypropylen hergestellt sein. Es ist auch die Verwendung unterschiedlicher Materialien für die voranstehend aufgeführten Teile möglich, sofern sichergestellt ist, daß die Teile miteinander verbunden werden können. Für die Dichtringe 5 und die Ringdichtungen 9 sowie die Dichtung 11 wird vorzugsweise Nitrilbutyl-Kautschuk verwendet. Die Schaltwelle 7 kann ebenfalls aus einem geeigneten Material, wie Rotguß, Messing, Edelstahl oder Kunststoff hergestellt werden.

Um das in den Fig. 1 und 2 dargestellte Kugelventil herzustellen, werden zuerst die mit den Dichtringen 5 versehenen Lagerringe 4 auf die Ventilkugel 3 aufgesetzt. Anschließend werden diese Teile mittels der ringförmigen Einlage 6 miteinander verbunden. Zuvor ist an dieser Einlage 6 die Lagerbuchse 8 befestigt worden. In diesem vormontierten Zustand werden die Teile 3,4,5,6 und 8 in eine auf der Zeichnung nicht dargestellte Spritzform eingelegt und mit Kunststoff umspritzt, vorzugsweise Polyäthylen. Damit dieser Kunststoff nicht nur in axialer Richtung durch die Schlitze 4a der Lagerringe 4 in das Gehäuseinnere eindringen kann, sondern auch in radialer Richtung, ist die Einlage 6 mit einer Mehrzahl von Durchtrittsöffnungen 6a versehen.

Durch die Anordnung der die Lagerringe 4 miteinander verbindenden und die Lagerbuchse 8 für die Schaltwelle 7 tragenden Einlage 6 innerhalb des in der Spritzform erzeugten Gehäuses 1 erfolgt eine Art Aufteilung dieses Gehäuses 1 in einen Außenteil und einen Innenteil, obwohl sich in der Spritzform ein einstückiges Gehäuse mit angeformten Rohranschlußstutzen 2 ergibt. Die Einlage 6 bewirkt jedoch, daß bei dem unvermeidbaren Schrumpfvorgang des in die Spritzform eingebrachten Kunststoffes ein Schrumpfen des Außenteils und Innenteils relativ zueinander erfolgt und damit ein Schrumpfen des Kunststoffes radial nach innen, d.h. in Richtung auf die Ventilkugel 3 verhindert wird. Damit wird die Gefahr beseitigt, daß der schrumpfende Kunststoff bei der Herstellung des Gehäuses 1 die Ventilkugel 3 unverdrehbar einklemmt. Die ringförmige Einlage 6 dient somit nicht nur der Vormontage der in die Spritzform einzulegenden Teile, sondern beeinflußt zugleich den Schrumpfvorgang des das einstückige Gehäuse 1 bildenden Kunststoffes.

Um die Erzeugung eines bestimmten Spiels zwischen der Ventilkugel 3 und dem einen Teil dieser Ventilkugel 3 umgebenden Kunststoff des Gehäuses 1 zu ermöglichen, kann die Ventilkugel 3 vor dem Einlegen in die Spritzform erwärmt werden, so daß sich nach deren Abkühlung und damit Schrumpfen ein vorgebbares Spiel ergibt.

Nach der voranstehend beschriebenen Herstellung des einstückig mit den Rohranschlußstutzen 2 ausgebildeten Gehäuses 1 aus Kunststoff wird die Schaltwelle 7 mit ihren Ringdichtungen 9 in die Lagerbuchse 8 derart eingesetzt, daß ihr Kupplungsstück 7a in die entsprechende Aussparung der Ventilkugel 3 eingreift. Anschließend wird auf die außenliegende Stirnfläche der Lagerbuchse 8 ein Lagerring 12 aufgeschraubt, der aufgrund der zwischen dem Vierkant 7b und dem Mittelstück der Schaltwelle 7 ausgebildeten Schulter ein Heraustreten der Schaltwelle 7 aus der Lagerbuchse 8 verhindert. Beim Ausführungsbeispiel wird schließlich der Schaltdom 10 auf den Vierkant 7b der Schaltwelle 7 aufgesetzt und mittels der Schraube 10b befestigt. Das Kugelventil ist betriebsbereit und kann mit den Stirnflächen seiner beiden Rohranschlußstutzen 2 in die jeweilige Kunststoffleitung, insbesondere eine Gasversorgungsleitung eingesetzt werden.

Wie insbesondere aus Fig. 1 hervorgeht, ergibt sich ein Kugelventil mit einem einteiligen Kunststoffgehäuse und einer Durchflußbohrung 3a der Ventilkugel 3, welche der Durchflußweite 2a der Rohranschlußstutzen 2 entspricht, so daß keinerlei Drosselverluste innerhalb des geöffneten Kugelventils auftreten. Durch die einstückige Ausbildung von Gehäuse 1 und Rohranschlußstutzen 2 entfällt die Gefahr von Undichtigkeiten. Die Verwendung von separaten Lageringen 4, die zudem durch die Einlage 6 in vorbestimmten Zustand zueinander gehalten werden, ergibt schließlich eine zuverlässige und langlebige Lagerung der Ventilkugel 3, die zudem zuverlässig durch in den Lagerringen 4 angeordneten Dichtringe 5 abgedichtet ist.

### Bezugszeichenliste:

- 1: Gehäuse
- 2: Rohranschlußstutzen
- 2a: Durchflußweite
- 3: Ventilkugel
- 3a: Durchflußbohrung
- 4: Lagerring
- 4a: Schlitz
- 5: Dichtring
- 6: Einlage
- 6a: Durchtrittsöffnung
- 7: Schaltwelle
- 7a: Kupplungsstück
- 7b: Vierkant
- 8: Lagerbuchse
- 9: Ringdichtung
- 10: Schaltdom
- 10a: Schlüsselfläche
- 10b: Schraube
- 11: Dichtung
- 12: Lagerring

## Patentansprüche

1. Verfahren zur Herstellung eines Kugelventils, insbesondere für Gasversorgungsleitungen, mit einem aus Kunststoff bestehenden, zwei Rohranschlußstutzen (2) aufweisenden Gehäuse (1), in dem eine mit einer Durchflußbohrung (3a) versehene und durch eine Schaltwelle (7) verdrehbare Ventilkugel (3) mittels zweier separater Lagerringe (4) gelagert ist, die gegenüber der Ventilkugel (3) mittels Dichtringen (5) abgedichtet sind,
**dadurch gekennzeichnet,**
daß die an gegenüberliegenden Seiten der Ventilkugel (3) angeordneten Lagerringe (4) durch eine ringförmige, mit Durchtrittsöffnungen (6a) versehene Einlage (6) miteinander und mit einer Lagerbuchse (8) für die in die Ventilkugel (3) eingreifende Schaltwelle (7) verbunden, in diesem vormontierten Zustand in eine die äußere Form des Gehäuses (1) und die Durchflußweite (2a) der Rohranschlußstutzen (2) erzeugende Spritzform eingelegt und mit Kunststoff umspritzt werden.

2. Verfahren nach Anspruch 1, dadurch gekennzeichnet, daß vor dem Umspritzen der Teile die Ventilkugel (3) erwärmt wird.

3. Kugelventil, insbesondere für Gasversorgungsleitungen, mit einem aus Kunststoff bestehenden, zwei Rohranschlußstutzen (2) aufweisenden Gehäuse (1), in dem eine mit einer Durchflußbohrung (3a) versehene und durch eine Schaltwelle (7) verdrehbare Ventilkugel (3) mittels zweier separater Lagerringe (4) gelagert ist, die gegenüber der Ventilkugel (3) mittels Dichtringen (5) abgedichtet sind,
**dadurch gekennzeichnet,**
daß die Lagerringe (4) durch eine mit Durchtrittsöffnungen (6a) versehene ringförmige Einlage (6) miteinander verbunden sind, an der zugleich eine Lagerbuchse (8) für die in die Ventilkugel (3) eingreifende Schaltwelle (7) befestigt ist.

4. Kugelventil nach Anspruch 3, dadurch gekennzeichnet, daß die Lagerringe (4) an ihrem mit der Einlage (6) verbundenen Umfang mit Schlitzen (4a) versehen sind.

5. Kugelventil nach Anspruch 3 oder 4, dadurch gekennzeichnet, daß die Schaltwelle (7) mittels mindestens einer Ringdichtung (9) gegenüber der Lagerbuchse (8) abgedichtet ist.

6. Kugelventil nach mindestens einem der Ansprüche 3 bis 5, dadurch gekennzeichnet, daß die Lagerringe (4), die Ventilkugel (3), die Einlage (6) und die Lagerbuchse (8) aus Rotguß, Messing, Edelstahl oder Kunststoff, vorzugsweise glasfaserverstärktem Kunststoff oder Polypropylen und das Gehäuse (1) mit den Rohranschlußstutzen (2) einstückig aus Polyäthylen hergestellt sind.

7. Kugelventil nach mindestens einem der Ansprüche 3 bis 6, dadurch gekennzeichnet, daß die Dichtringe (5) aus Nitrilbutyl-Kautschuk hergestellt sind.

## Claims

1. Method of manufacturing a ball valve, in particular for gas supply lines, having a housing (1) which consists of plastic, has two pipe connection pieces (2) and in which a valve ball (3) provided with a throughflow passage (3a) and able to be turned by a control shaft (7) is mounted by means of two separate bearing rings (4) which are sealed with respect to the valve ball (3) by means of sealing rings (5), characterized in that the bearing rings (4), arranged on opposite sides of the valve ball (3), are connected to each other by an annular liner (6), which is provided with through-openings (6a), and are connected to a bearing bush (8) for the control shaft (7) engaging in the valve ball (3), are placed in this preassembled state into an injection mould producing the outer form of the housing (1) and the throughflow width (2a) of the pipe connection pieces (2) and are encapsulated in plastic.

2. Method according to Claim 1, characterized in that the valve ball (3) is heated before encapsulation of the parts.

3. Ball valve, in particular for gas supply lines, having a housing (1) which consists of plastic, has two pipe connection pieces (2) and in which a valve ball (3) provided with a throughflow passage (3a) and able to be turned by a control shaft (7) is mounted by means of two separate bearing rings (4) which are sealed with respect to the valve ball (3) by means of sealing rings (5), characterized in that the bearing rings (4) are connected to each other by an annular liner (6) which is provided with through-openings (6a) and on which at the same time there is fastened a bearing bush (8) for the control shaft (7) engaging in the valve ball (3).

4. Ball valve according to Claim 3, characterized in that the bearing rings (4) are provided with slits (4a) on their circumference, which is connected to the liner (6).

5. Ball valve according to Claim 3 or 4, characterized in that the control shaft (7) is sealed with respect to the bearing bush (8) by means of at least one ring seal (9).

6. Ball valve according to at least one of Claims 3 to 5, characterized in that the bearing rings (4), the valve ball (3), the liner (6) and the bearing bush (8) are manufactured from bronze, brass, stainless steel or plastic, preferably glass-fibre reinforced plastic or polypropylene, and the housing (1) is manufactured in one piece with the pipe connection pieces (2) from polyethylene.

7. Ball valve according to at least one of Claims 3 to 6, characterized in that the sealing rings (5) are manufactured from nitrile-butyl rubber.

## Revendications

1. Procédé de fabrication d'un robinet à boisseau sphérique, en particulier pour conduites d'alimentation en gaz, comprenant un boîtier (1) qui est réalisé an matière plastique et comporte deux raccords tubulaires (2) et dans lequel un boisseau (3) pourvu d'un orifice de passage (3a) et manoeuvré par un arbre de commande (7) est supporté par deux bagues d'appui séparées (4) qui sont étanchées au moyen d'anneaux d'étanchéité (5) par rapport au boisseau (3), caractérisé en ce qu'au moyen d'une garniture annulaire (6) pourvue de trous d'écoulement (6a), les bagues d'appui (4) disposées sur des côtés opposés du boisseau (3) sont reliées l'une à l'autre et à un coussinet (8) destiné à l'arbre de commande (7) pénétrant dans le boisseau (3), sont placées, dans cet état préassemblé, dans un moule à injection générant la forme extérieure du boîtier (1) et la largeur d'écoulement (2a) des raccords tubulaires (2), et sont recouvertes par injection de matière plastique.

2. Procédé selon la revendication 1, caractérisé en ce que le boisseau (3) est chauffé avant de recouvrir les pièces par injection.

3. Robinet à boisseau sphérique, en particulier pour conduites d'alimentation en gaz, comprenant un boîtier (1) qui est réalisé en matière plastique et comporte deux raccords tubulaires (2) et dans lequel un boisseau (3) pourvu d'un orifice de passage (3a) et manoeuvré par un arbre de commande (7) est supporté par deux bagues d'appui séparées (4) qui sont étanchées au moyen d'anneaux d'étanchéité (5) par rapport au boisseau (3), caractérisé en ce que les bagues d'appui (4) sont reliées entre elles par une garniture annulaire (6) qui est pourvue de trous d'écoulement (6a) et à laquelle est également fixé un coussinet (8) destiné à l'arbre de commande (7) pénétrant dans le boisseau (3).

4. Robinet à boisseau sphérique selon la revendication 3, caractérisé en ce que, à leur périphérie supportant la garniture (6), les bagues d'appui (4) sont munies de fentes (4a).

5. Robinet à boisseau sphérique selon la revendication 3 ou 4, caractérisé en ce que l'arbre de commande (7) est étanché par rapport au coussinet (8) à l'aide d'au moins un joint annulaire (9).

6. Robinet à boisseau sphérique selon au moins l'une des revendications 3 à 5, caractérisé en ce que les bagues d'appui (4), le boisseau (3), la garniture (6) et le coussinet (8) sont réalisés en bronze « Rotguss », en laiton, en acier fin ou en matière plastique, de préférence en matière plastique armée aux fibres de verre ou en polypropylène, et le boitier (1) est fabriqué en polyéthylène d'une seule pièce avec les raccords tubulaires (2).

7. Robinet à boisseau sphérique selon au moins l'une des revendications 3 à 6, caractérisé en ce que les anneaux d'étanchéité (5) sont fabriqués en caoutchouc nitrile-butyle.
